# EUROPÄISCHE PATENTSCHRIFT

(11) **EP 2 330 329 B1**
(45) Veröffentlichungstag und Bekanntmachung des Hinweises auf die Patenterteilung: **05.09.2012**
(21) Anmeldenummer: 10007134.9
(22) Anmeldetag: 10.07.2010
(51) Int. Cl.: F16L 37/088

(54) **Rohrkupplungssystem, insbesondere für eine Anbohrvorrichtung**
Tube coupling system, in particular for a tapping device
Système d'accouplement tubulaire, notamment pour un dispositif de perçage

(30) Priorität: 01.12.2009 DE 102009056336
(43) Veröffentlichungstag der Anmeldung: 08.06.2011
(73) Patentinhaber: Erhard GmbH & Co. KG, 89522 Heidenheim (DE)
(72) Erfinder: Kampfl, Robert, 89522 Heidenheim (DE); Hefele, Eduard, 89561 Dischingen (DE)
(74) Vertreter: Dr. Weitzel & Partner

(56) Entgegenhaltungen:
- DE-A1- 4 420 179
- DE-A1-102005 047 835
- US-A1- 2007 145 742

## Beschreibung

Die Erfindung betrifft ein Rohrkupplungssystem, mit welchem zwei Rohrabschnitte, die miteinander fluchten, zusammengekoppelt werden, gemäß dem Oberbegriff des Anspruchs 1.

Ein solches Rohrkupplungssystem ist durch die US 2007/0145742 A1 bekannt.

Es sind zahlreiche Systeme ähnlicher Art bekannt geworden. DE 10 2005 058 161 A1 beschreibt einen Schnellverschluss zum Verbinden eines Rohrleitungsabschnittes mit einem Anschlussstutzen. Dabei wird mittels eines Ringes, der im Durchmesser veränderbar ist, eine zugsichere Verbindung zwischen den beiden genannten Teilen hergestellt.

DE 44 20 179 C2 betrifft eine Anbohrarmatur. Dabei wird ein Abgangsstutzen mit einem Rohrabschnitt zugfest und dichtend verbunden.

Ein weiteres Anwendungsbeispiel ist beschrieben in EP 1 645 792 B1. Diese Schrift betrifft eine Anbohrvorrichtung. Auch hierbei ist ein Anschlussstutzen mit einem Rohrabschnitt zu verbinden.

Ganz allgemein ist es bekannt, eine Verbindung der genannten Art durch Gewinde herzustellen. Auch sind Bajonettverschlüsse bekannt.

Der Erfindung liegt die Aufgabe zugrunde, ein Rohrkupplungssystem anzugeben, mit welchem ein erster Rohrabschnitt und ein zweiter Rohrabschnitt (Rohrstutzen) zuverlässig und mit geringem Aufwand miteinander verbunden werden können. Die Verbindung soll absolut zuverlässig, gas- und flüssigkeitsdicht sein und axialen Zugkräften standhalten.

Diese Aufgabe wird durch die Merkmale von Anspruch 1 gelöst.

Die wesentlichen Elemente der Erfindung sind die Folgenden:
- Der Rohrabschnitt weist an seiner äußeren Mantelfläche wenigstens eine Ringnut auf, am besten zwei oder mehrere, zum Beispiel drei Ringnuten.
- Es ist ein Haltering vorgesehen, der in die untere Ringnut eingreift.
- Es sind Riegel vorgesehen, die zwischen dem Rohrstutzen und dem Haltering an verschiedenen Umfangspositionen einschiebbar sind.

Damit wird auf höchst einfache Weise eine zugfeste Verbindung zwischen dem Rohrabschnitt und dem Rohrstutzen geschaffen.

Das erfindungsgemäße Prinzip lässt sich besonders gut bei Anbohrvorrichtungen der genannten Art anwenden.

Die Erfindung ist anhand der Zeichnung näher erläutert. Darin ist im Einzelnen Folgendes dargestellt:
- Figur 1: zeigt in perspektivischer Darstellung einen Rohrabschnitt sowie einen Rohrstutzen, die ineinander gesteckt sind.
- Figur 2: zeigt in einem Axialschnitt einen Rohrabschnitt, der in einen Rohrstutzen eingesteckt ist, mit einer inaktiven Sicherung.
- Figur 3: zeigt den Gegenstand von Figur 2 mit einer aktivierten Sicherung.
- Figur 4: zeigt den Gegenstand von Figur 3, um die Längsachse um 45 Grad verdreht.

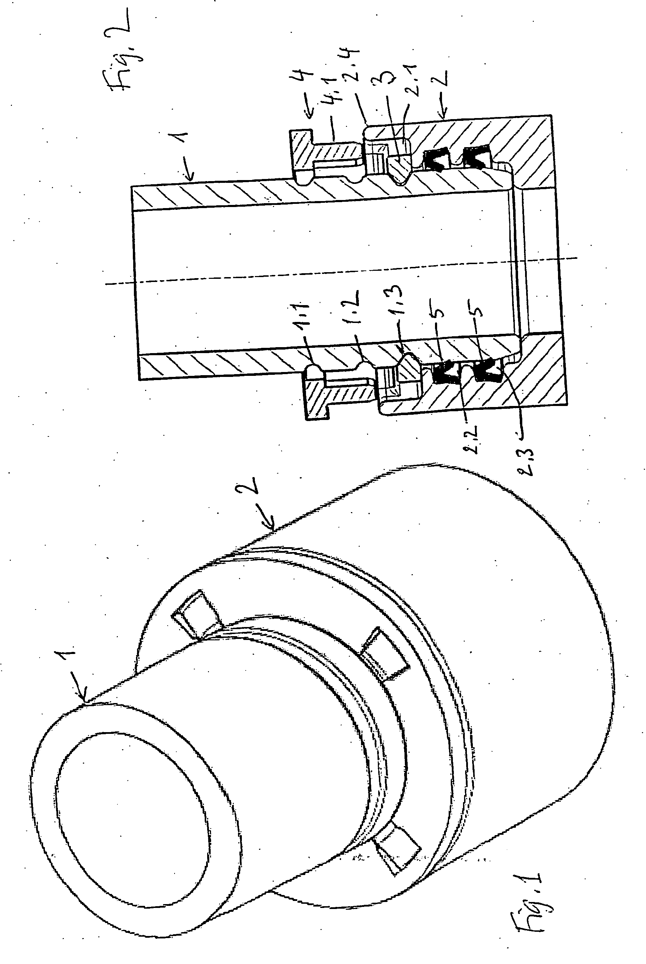

Den genauen Aufbau des Rohrkupplungssystems erkennt man aus Figur 2. Rohrabschnitt 1 ist mit seinem unteren Ende in den Rohrstutzen 2 eingeführt. Rohrabschnitt 1 weist eine obere Ringnut 1.1 auf, ein darunter befindliche mittlere Ringnut 1.2 sowie eine untere Ringnut 1.3. Ringnut 1.3 ist etwas tiefer in Rohrabschnitt 1 eingeschnitten, als die beiden anderen Ringnuten 1.1 und 1.2.

Ein entscheidendes Bauteil ist ein Haltering 3. Dieser greift in die untere Nut 1.3 des Rohrabschnittes 1 ein. Haltering 3 befindet sich zugleich in einer nach oben teilweise offenen Aussparung 2.1 des Rohrstutzens 2.

Ein weiteres entscheidendes Bauteil ist ein Sicherungsring 4. Dieser trägt eine Anzahl von Riegeln 4.1, die mit dem übrigen Sicherungsring einteilig sind. Ferner trägt der Sicherungsring 4 in seinem oberen radial inneren Teil eine Reihe von Zähnen. Die Riegel 4.1 und die Zähne 4.2 sind einteilig mit dem übrigen Sicherungsring 4. Der Sicherungsring 4 kann aus Kunststoff bestehen.

Unterhalb von Aussparung 2.1 des Rohrstutzens 2 sind zwei weitere Aussparungen 2.3, 2.4 vorgesehen. Diese enthalten Dichtringe 5.

Das erfindungsgemäße Rohrkupplungssystem lässt sich wie folgt handhaben: Zunächst wird Rohrabschnitt 1 mit seinem unteren Ende in das obere Ende von Rohrstutzen 2 eingesteckt. Haltering 3 und Sicherungsring 4 befinden sich in denjenigen Positionen, in denen sie in Figur 2 dargestellt sind.

Die angefaste Unterkante des Rohrabschnittes 1 gelangt beim Einstecken zum Haltering 3. Um Rohrabschnitt 1 noch weiter in den Rohrstutzen 2 einzuschieben, bedarf es eines gewissen Kraftaufwandes, um Haltering 3 um ein geringes Maß aufzuweiten. Schließlich erreicht Rohrabschnitt 1 in axialer Richtung gesehen die in Figur 2 dargestellte Position. Haltering 3 schnappt in die untere Nut 1.3 des Rohrabschnittes 1 ein.

Nunmehr wird der Sicherungsring ebenfalls nach unten gedrückt. Dabei gelangen die Riegel 4.1 des Sicherungsringes 4 in die Aussparung 2.1, in welcher sich bereits der Haltering 3 befindet. Die Riegel 4.1 befinden sich nunmehr zwischen Haltering 3 und einem oberen Bund 2.4 des Rohrstutzens 2. Damit wird ein radiales Aufweiten des Halteringes 3 verhindert. Haltering 3 bleibt nunmehr in der unteren Nut 1.3 positiv gesichert. Wird ein Zug auf die beiden Elemente Rohrabschnitt 1 und Rohrstutzen 2 im Sinne eines Lösens aufgebracht, so wird ein solches Lösen durch den Haltering 3 verhindert.

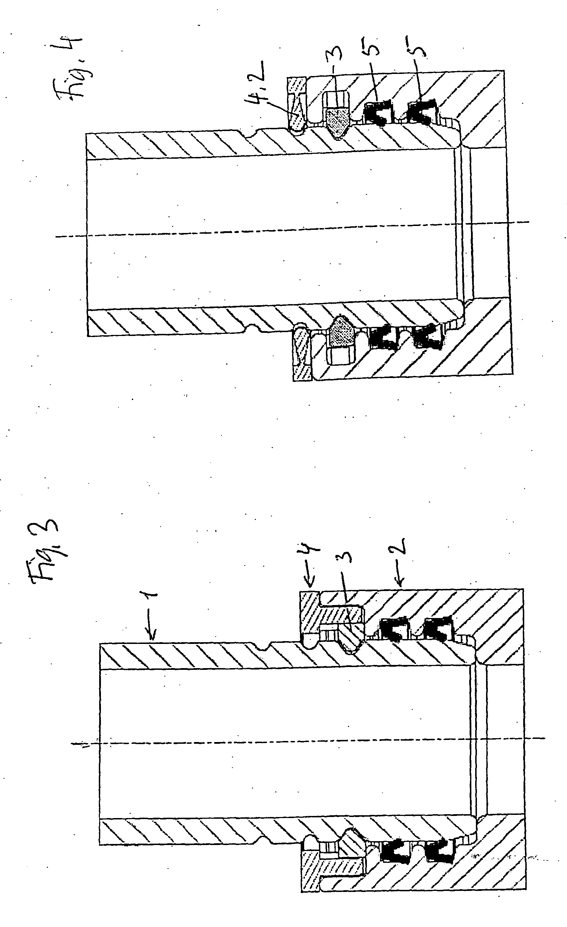

Dieser Zustand ist in den Figuren 3 und 4 dargestellt. In Figur 4 erkennt man auch die Zähne 4.2. Diese befinden sich nunmehr in der mittleren Nut 1.2 des Rohrabschnittes 1. Bei dem in Figur 2 gezeigten Zustand sieht man die Zähne nicht. Diese sind verdeckt. Sie befinden sich aber in der oberen Nut 1.1.

Haltering 3 kann offen sein, derart; dass er zwei einander zugewandte freie Enden hat. Er kann auch segmentiert sein, das heißt aus zwei oder mehreren Ringsegmenten bestehen. Ist er offen oder besteht er aus Ringsegmenten, so können die einander zugewandten Enden nicht-ebene Flächen aufweisen, die ineinandergreifen. So ist zum Beispiel eine Pfeilform denkbar.

Wie oben beschrieben, erfordert das Einführen des Rohrabschnittes 1 in den Rohrstutzen 2 einen Kraftaufwand dann, wenn die angefaste untere Kante des Rohrabschnittes zum Haltering 3 gelangt. Dies ist jedoch nicht unbedingt notwendig. So könnte sich beispielsweise Haltering 3 vor dem Einführen des Rohrabschnittes 1 in den Rohrstutzen 2 in einer Radialposition befinden, in der er nicht in die untere Nut 1.3 eingreift. Sein radial äußerer Bereich könnte derart angefast sein, dass der Haltering 3 beziehungsweise dessen Ringsegmente durch die Riegel 4.2 beim Herabfahren des Sicherungsrings in die untere Nut 1.3 eingeschoben werden.

Haltering 3 kann über seinen Umfang verteilte Einschnitte aufweisen.

### Bezugszeichenliste

- 1: Rohrabschnitt
- 1.1: obere Nut
- 1.2: mittlere Nut
- 1.3: untere Nut
- 2: Rohrstutzen
- 2.1: Aussparung
- 2.2: Aussparung
- 2.3: Aussparung
- 2.4: Aussparung
- 3: Haltering
- 4: Sicherungsrings
- 4.1: Riegel
- 4.2: Zähne
- 5: Dichtring

## Patentansprüche

1. Rohrkupplungssystem
mit einem Rohrabschnitt (1);
mit einem Rohrstutzen (2), der den Rohrabschnitt (1) auf einem Teil seiner Länge umschließt;
wobei der Rohrabschnitt (1), an seiner äußeren Mantelfläche wenigstens eine Ringnut (1.1, 1.2, 1.3), vorzugsweise zwei oder drei Ringnuten aufweist; wobei ein Haltering (3) vorgesehen ist, der in eine (1.3) der Ringnuten (1.1, 1.2, 1.3) eingreift; **dadurch gekennzeichnet, dass**
ein Sicherungsring (4) vorgesehen ist der eine Anzahl von Riegeln (4.1) trägt, die mit dem übrigen Sicherungsring (4) einteilig sind; wobei
die Riegel (4.1) zwischen den Rohrstutzen (2) und dem Haltering (3) an verschiedenen Umfangspositionen einschiebbar sind.

2. Rohrkupplungssystem nach Anspruch 1, **gekennzeichnet durch** die folgenden Merkmale:
der Haltering (3) ist im Querschnitt gesehen keilförmig;
der sich verjüngende Bereich des Keiles greift in die Ringnut (1.1, 1.2, 1.3) ein.

3. Rohrkupplungssystem nach Anspruch 1 oder 2, **dadurch gekennzeichnet, dass** der Haltering (3) aus glasfaserverstärktem Polyamid besteht.

4. Rohrkupplungssystem nach einem der Ansprüche 1 bis 3, **dadurch gekennzeichnet, dass** der Haltering (3) offen ist.

5. Rohrkupplungssystem nach Anspruch 4, **dadurch gekennzeichnet, dass** die Trennfuge zwischen den beiden Enden des Halteringes (3) - in Richtung der Mittelachse des Halteringes gesehen - einen von der Geraden abweichenden Verlauf hat, insbesondere pfeilförmig ist.

6. Rohrkupplungssystem nach einem der Ansprüche 1 bis 5, **dadurch gekennzeichnet, dass** der Haltering (3) über seinen Umfang verteilte Einschnitte aufweist.

7. Rohrkupplungssystem nach einem der Ansprüche 1 bis 6, **dadurch gekennzeichnet, dass** die Riegel (4.1) an einem Ring gehalten sind, der den Rohrabschnitt (1) umschließt.

## Claims

1. A tube coupling system
having a tubular section (1);
having a connecting sleeve (2), which encloses the tubular section (1) on a portion of its length;
whereas the tubular section (i1) has at least one ring groove (1.1,1.2,1.3), preferably two or three ring grooves on its external envelope surface;
whereas a retainer ring (3) is provided, which engages into one (1.3) of the ring grooves (1.1, 1.2, 1.3); **characterised in that**
a locking ring (4) is provided, which carries a number of locks (4.1), which are integral with the remaining retaining ring (4); whereas the locks (4.1) can be pushed in between the connecting sleeve (2) and the retainer ring (3) at different circumferential positions.

2. The tube coupling system of claim 1, **characterised by** the following features:
the retainer ring (3) is wedge-shaped seen in cross-section;
the tapering area of the wedge engages into the ring groove (1.1,1.2,1.3).

3. The tube coupling system of claim 1 or 2, **characterised in that** the retainer ring (3) consists of glassfibre reinforced polyamide.

4. The tube coupling system of one of the claims 1 to 3, **characterised in that** the retainer ring (3) is open.

5. The tube coupling system of claim 4, **characterised in that** the separating joint between both ends of the retainer ring (3) - seen in direction of the centre line of the retainer ring - follows a path deviating from a straight line, is in particular arrow-shaped.

6. The tube coupling system of one of the claims 1 to 5, **characterised in that** the retainer ring (3) comprises notches distributed over its circumference.

7. The tube coupling system of one of the claims 1 to 6, **characterised in that** the locks (4.1) are held on a ring, which encloses the tubular section (1).

## Revendications

1. Système de raccord de tuyauterie
présentant une section tubulaire (1);
présentant un raccord tubulaire (2) renfermant la section tubulaire (1) sur une partie de sa longueur;
dans lequel la section tubulaire (1) comporte au moins une gorge annulaire (1.1,1.2,1.3), de préférence deux ou trois gorge annulaires sur son enveloppe externe;
dans lequel une bague de retenue (3) est prévue, s'engrènant dans l'une (1.3) des gorge annulaires (1.1, 1.2, 1.3); **caractérisé en ce qu'**une bague frein (4) est prévue, portant un certain nombre de verrous (4.1), solidaires de la bague frein restante (4);
dans lequel les verrous (4.1) peuvent être enfoncés entre le raccord tubulaire (2) et la bague de retenue (3) en différentes positions circonférentielles.

2. Système de raccord de tuyauterie selon la revendication 1, présentant les caractéristiques suivantes:
la bague de retenue (3) est en forme de coin en coupe transversale;
la partie rétrécissante du coin s'engrène dans la gorge annulaire (1.1,1.2,1.3).

3. Système de raccord de tuyauterie selon la revendication 1 ou 2, **caractérisé en ce que** la bague de retenue (3) se compose de polyamide renforcé de fibre de verre.

4. Système de raccord de tuyauterie selon l'une des revendications 1 à 3, **caractérisé en ce que** la bague de retenue (3) est ouverte.

5. Système de raccord de tuyauterie selon la revendication 4, **caractérisé en ce que** le joint de séparation entre les deux extrémités de la bague de retenue (3) - vu dans le sens de la ligne médiane de la bague de retenue - suit un parcours s'écartant de la ligne droite, notamment en forme de flêche.

6. Système de raccord de tuyauterie selon l'une des revendications 1 à 5, **caractérisé en ce que** la bague de retenue (3) présente des encoches réparties sur sa circonférence.

7. Système de raccord de tuyauterie selon l'une des revendications 1 à 6, **caractérisé en ce que** les verrous (4.1) sont maintenues au niveau d'une bague renfermant la section tubulaire (1).
